**Europäisches Patentamt**

**European Patent Office**

**Office européen des brevets**

(19)

(11) Veröffentlichungsnummer: **0 111 161**
**B1**

(12) **EUROPÄISCHE PATENTSCHRIFT**

(45) Veröffentlichungstag der Patentschrift: **30.01.91**

(21) Anmeldenummer: **83111105.9**

(22) Anmeldetag: **07.11.83**

(51) Int. Cl.⁵: **G 06 F 9/26**, G 06 F 13/28, G 06 F 13/12

(54) Vorrichtung zur Mikrobefehls-Bereitstellung für mindestens zwei unabhängig arbeitende Funktionseinheiten in einem integrierten, mikroprogrammierten elektronischen Baustein und Verfahren zu ihrem Betrieb.

(30) Priorität: **09.11.82 DE 3241357**

(43) Veröffentlichungstag der Anmeldung:
**20.06.84 Patentblatt 84/25**

(45) Bekanntmachung des Hinweises auf die Patenterteilung:
**30.01.91 Patentblatt 91/05**

(84) Benannte Vertragsstaaten:
**AT DE FR GB IT**

(56) Entgegenhaltungen:
**US-A-3 766 526**

**ELEKTRONIK PRAXIS, NR. 9, September 1982, Seiten 131-134, Vogel Verlag, Würzburg, DE; A. BODE et al.: "Systementwurf mit Bitslice-Mikroprozessoren"**

**ELECTRONICS INTERNATIONAL, Band 55, Nr. 20, Oktober 1982, Seiten 95-97, New York, US; R. BEACH et al.: "System-level functions enhance controller IC"**

(73) Patentinhaber: **Siemens Aktiengesellschaft**
**Wittelsbacherplatz 2**
**D-8000 München 2 (DE)**

(72) Erfinder: **Stadlmeier, Hans, Dipl.-Ing.**
**Aichacher Strasse 2**
**D-8000 München 70 (DE)**
Erfinder: **Schönberger, Franz, Dipl.-Ing.**
**Grasmückenweg 23**
**D-8000 München 45 (DE)**

## Beschreibung

Die Erfindung betrifft eine Vorrichtung zur Mikrobefehls-Bereitstellung für mindestens zwei unabhängig arbeitende Funktionseinheiten in einem integrierten, mikroprogrammierten elektronischen Baustein nach dem Oberbegriff des Anspruchs 1 und ein Verfahren zu ihrem Betrieb.

Der integrierte Hochleistungs-DMA-Kontroller ADMA (advanced direct memory access) besitzt vier voneinander unabhängige Kanäle, die den Datentransfer zwischen Medien (Peripherie-Geräte, Speicher), allgemein gesprochen zwischen Datenquellen und Datensenken bewerkstelligen. Die Kanäle sind insofern unabhängig voneinander, als sie ihre Steuerparameter (z.B. Adressen von Datenquelle und Datensenke, Adreß-Zählrichtung, Bytezahl, Vergleichsbitmuster) aus ihnen zugeordneten Steuerregistern beziehen, welche mit Werten aus Kontrollblöcken von einem sogenannten Organisationsspeicher geladen werden. Das Aufgabenspektrum ist für alle Kanäle gleich. Ein oder mehrere Kanäle können zusätzliche Funktionen als Multiplexer-Kanäle übernehmen.

Trotz der Unabhängigkeit der Kanäle oder allgemeiner gesprochen Funktionseinheiten ist man bestrebt, möglichst viele Resourcen nur einmal aufzubauen und diese Resourcen von allen Kanälen verwenden zu lassen. Dies trägt Platzgründen und Laufzeitgründen Rechnung. Dies geschieht beispielsweise aus physikalischen/systemtechnischen Gründen bei der Ein-/Ausgabe-Schnittstelle des integrierten, mikroprogrammierten elektronischen Bausteins, da ja nur ein Satz Daten- und Adreßpins (Kontaktstifte) zur Verfügung steht. Diese gemeinsame Benutzung (sharing) von Resourcen bedeuten aber, daß die Kanäle streng genommen nicht gleichzeitig arbeiten können, sondern nur im Pipeline-Verfahren.

Die Hauptsteuerung der Kanäle oder allgemeiner der Funktionseinheiten übernehmen Mikroprogramme, welche beim Starten des jeweiligen Kanals die benötigte Steuerinformation aus dem Organisationsspeicher lesen, interne Verwaltungsaufgaben durchführen, den eigentlichen Datentransfer kontrollieren und schließlich wieder Steuerinformation, z.B. Status, im Organisationsspeicher ablegen.

Da die Kanäle unabhängig arbeiten, wird auch die Steuerinformation der Mikroprogramme viermal benötigt, wobei aus Leistungsgründen (Transferrate, Reaktionszeit auf Transferanforderungen) die Forderungen bestehen, daß der kanalspezifische oder allgemeiner Funktionseinheiten-spezifische Mikrobefehl unmittelbar mit Auswahl, d.h. Priorisierung des jeweiligen Kanals, bereitsteht, daß der jeweilige Kanal nach Ausführung eines jeden Mikrobefehls durch die Priorisierung eines anderen Kanals unterbrochen werden kann und daß Mikrobefehle ohne Zeitverzug hintereinander ablaufen können.

Aus der US—A—3,766,526 ist eine Multiplex- und Steuereinrichtung zur Mikrobefehls-Bereitstellung für mehre DMA-Kanäle bekannt, wobei jedem DMA-Kanal Command-List-Instruction-Location-Register (Command Pointer Register), ein Data-Adreßregister, ein Wortcommandregister und ein Command-Register zugeordnet ist. Obwohl bei dieser Multiplex- und Steuereinrichtung in der Target-Ebene jedem Kanal eigene Register zugeordnet sind, ist in der Mikrobefehls-Ebene nur ein Mikrobefehl-Instruktions-Register für alle DMA-Kanäle vorgesehen. Zum Bereitstellen eines Mikrobefehls, insbesondere beim Umschalten zwischen zwei Kanälen benötigt eine solche Schaltung jeweils zum Übertragen des Mikrobefehls aus dem Mikrobefehlsspeicher in das Mikrobefehls-Instruktions-Register einen Lesezyklus. Dadurch wird die mit einer solchen Multiplex- und Steuereinrichtung erzielbare Transferrate eingeschränkt.

Der vorliegenden Erfindung liegt die Aufgabe zugrunde, eine Vorrichtung der eingangs genannten Art und ein Verfahren zu ihrem Betrieb anzugeben, die eine hohe Transferrate und eine kurze Reaktionszeit auf Transferanforderungen ermöglicht.

Diese Aufgabe wird erfindungsgemäß durch eine Vorrichtung nach Anspruch 1 bzw. ein Verfahren nach Anspruch 4 gelöst.

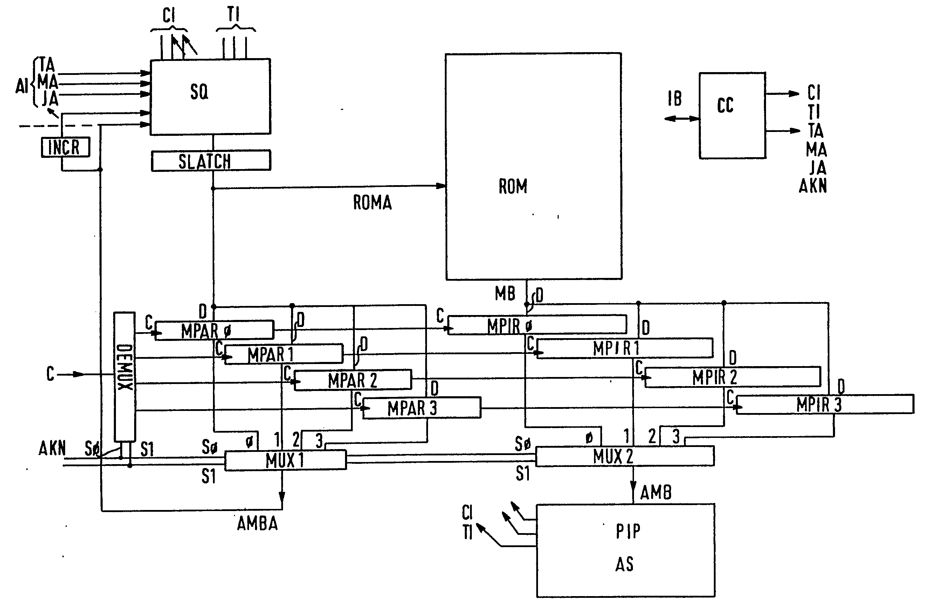

Ausgestaltungen und Vorteile der Erfindung sind in den Unteransprüchen, der Beschreibung und der Zeichnung dargestellt.

Ein Ausführungsbeispiel der Erfindung ist in der Figur dargestellt und wird im folgenden näher beschrieben.

Die Figur zeigt ein Prinzipschaltbild für ein Ausführungsbeispiel der Erfindung.

Anstatt vier identische Mikrobefehls-Festwertspeicher ROM aufzubauen mit jeweils einem zugehörigen Mikrobefehls-Adreßregister MPARi, i=0, 1, 2, 3, und mit jeweils einem zugehörigen Mikroinstruktionsregister MPIRi, i=0, 1, 2, 3, wird bei einem Ausführungsbeispiel für eine erfindungsgemäße Vorrichtung nur ein einziger Mikrobefehls-Festwertspeicher ROM verwendet, wobei vier verschiedene kanalspezifische oder allgemeiner Funktionseinheiten-spezifische MPARi und MPIRi benötigt werden, aber insgesamt nur ein einziger Sequenzer-Zwischenspeicher SLATCH, welcher die ROM-Ansteueradresse ROMA enthält.

In jedem Mikrobefehls-Adreßregister MPARI steht die Adresse des im zugehörigen Mikroinstruktionsregister MPIRi stehenden Mikrobefehls MB. Die vier Mikroinstruktionsregister MPIRi stellen dabei die Stufe 0 des nachgeschalteten Pipelinings der Ausführungssteuerung AS dar. Dafür sind Mittel PIP vorgesehen, die das Pipelining ermöglichen.

Die vier Kanäle oder allgemeiner Funktionseinheiten beziehen ihre Steuerparameter aus ihnen zugeordneten Steuerregistern in einer zentralen Steuereinheit CC. Diese Steuerregister in der zentralen Steuereinheit CC werden mit Werten aus Kontrollblöcken von einem sogenannten Organisationsspeicher geladen. Die zentrale Steuereinheit CC kann über einen internen Datenbus IB geladen werden. Die zentrale Steuereinheit CC besitzt zusätzlich eine Einheit zur Priorisierung eines Kanals oder einer Funktionseinheit. Über ein Signal AKN wird der neu zu aktivierende Kanal ausgewählt oder priorisiert. Mit Auswahl des neu zu aktivierenden Kanals werden das dazugehörige Mikroinstruktionsregister MPIRi und das zugehörige Mikroadreßregister MPARi ausgelesen. Zu diesem Zweck steuert das Signal AKN über zwei Steuerleitungen S0, S1 zwei Multiplexer MUX1, MUX2 und einen Demultiplexer DEMUX. Am Ausgang des Multiplexers MUX1 erscheint infolge des Signals AKN die zum priorisierten Kanal zugehörige aktuelle Mikrobefehlsadresse AMBA. Am Ausgang des Multiplexers MUX2 erscheint infolge des Signals AKN der zum priorisierten Kanal zugehörige aktuelle Mikrobefehl AMB. Der Demultiplexer DEMUX verfügt über einen Eingang mit dem Taktsignal C. Mit diesem Taktsignal C werden die zum priorisierten Kanal zugehörigen Mikrobefehls-Adreßregister MPARi und Mikroinstruktionsregister MPIRi geclockt.

Die Ausführung des aktuellen Mikrobefehls AMB wird von einer Ausführungssteuerung AS überwacht. Die Ausführung von aufeinanderfolgenden aktuellen Mikrobefehlen AMB erfolgt vorteilhafterweise im Pipeline-Verfahren in einer dafür geeigneten Vorrichtung PIP. Während der Ausführung des aktuellen Mikrobefehls AMB stellt ein Sequenzer SQ aufgrund von Testinformationen TI und Steuerinformationen CI die Mikrobefehlsadresse ROMA des in dem jeweils gerade priorisierten Kanalsfolgenden Mikrobefehls MB bereit. Diese Mikrobefehlsadresse ROMA wird in einem Zwischenspeicher SLATCH zwischengespeichert und steuert einen Lesezyklus im Mikrobefehls-Festwertspeicher ROM an, welcher dann den neuen kanalspezifischen oder allgemeiner Funktionseinheiten-spezifischen neuen Mikrobefehl MB liefert.

Die Steuerinformationen CI und die Testinformationen TI werden dabei sowohl von der zentralen Steuereinheit CC als auch von der Ausführungssteuerung AS geliefert. Die aktuelle Mikrobefehlsadresse AMBA kann über einen Inkrementer INCR inkrementiert werden und auf diese Weise die Mikrobefehlsadresse ROMA des kanalspezifisch folgenden neuen Mikrobefehls MB liefern. Der Sequenzer SQ erhält jedoch zusätzliche Adreßinformationen AI von der zentralen Steuereinheit CC. Es kann beispielsweise eine Testadresse TA, eine Mapadresse MA oder eine Sprungadresse (jump adress) JA sein.

Am Ausführungsende des aktuellen Mikrobefehls AMB werden der kanalspezifisch neu gelesene folgende Mikrobefehl MB in das zugehörige kanalspezifische Mikroinstruktionsregister MPIRi und die neue zugehörige folgende Mikrobefehlsadresse ROMA aus dem Zwischenspeicher SLATCH in das kanalspezifische zugehörige Mikroprogramm-Adreßregister MPARi des aktuellen Kanals eingetragen. Wird die Auswahl des gerade aktuellen Kanals nun unterbrochen, so steht, wenn dieser Kanal später wieder priorisiert wird, sofort der zu diesem Kanal dazugehörige Mikrobefehl im zugehörigen Mikroinstruktionsregister MPIRi bereit. Adreßinformationen AI können auch von der Ausführungssteuerung AS bereitgestellt werden.

## Patentansprüche

1. Vorrichtung zur Mikrobefehlsbereitstellung für mindestens zwei unabhängig arbeitende Datenübertragungskanäle eines DMA-Controllers mit einem Mikrobefehlsspeicher (ROM), mit Mikrobefehls-Adreßregister und Mikrobefehls-Instruktions-Register, dadurch gekennzeichnet, daß zusätzlich zu den üblichen Command-Pointer-Registern jeder Datenübertragungskanal mit einem Mikrobefehl-Adreßregister (MPARi) und mit je einem Mikrobefehl-Instruktions-Register (MPIRi) versehen ist, daß in den Mikrobefehl-Adreßregistern (MPARi) die Adresse des im zugehörigen Mikrobefehl-Instruktions-Register (MPIRi) enthaltenen Mikrobefehls (MB) enthalten ist und daß der Mikrobefehlsspeicher (ROM) über einen einzigen Zwischenspeicher (SLATCH) verfügt, der eine Mikrobefehlsspeicher-Ansteueradresse (ROMA) enthält.

2. Vorrichtung nach Anspruch 1, dadurch gekennzeichnet, daß die Mikrobefehls-Instruktionsregister (MPIRi) die Stufe 0 für eine nachgeschaltete Pipeline-Vorrichtung (PIP) und für eine Ausführungssteuerung (AS) darstellen.

3. Vorrichtung nach Anspruch 1 oder 2, gekennzeichnet durch Mittel (CC, AS, SQ, AKN) zur Auswahl eines neu zu aktivierenden Datenübertragungskanals.

4. Verfahren zum Betrieb einer Vorrichtung nach einem der Ansprüche 1 bis 3, dadurch gekennzeichnet, daß nach Auswahl eines neu zu aktivierenden Datenübertragungskanals das zugehörige Mikrobefehl-Instruktionsregister (MPIRi) und das zugehörige Mikrobefehl-Adreßregister (MPARi) ausgelesen werden und daß die Mikrobefehl-Ansteueradresse (ROMA) im Zwischenspeicher (SLATCH) zwischengespeichert und im Mikrobefehlsspeicher (ROM) zur Ansteuerung eines Lesezyklus genutzt wird, der den neuen Mikrobefehl (MB) liefert.

5. Verfahren nach Anspruch 4, dadurch gekennzeichnet, daß während der Ausführung eines aktuellen Mikrobefehls (AMB) ein Sequenzer (SQ) aufgrund von Test- und Steuerinformation (TI, CI) die Mikrobefehlsspeicher-Ansteueradresse (ROMA) des folgenden Mikrobefehls (MB) bereitstellt.

6. Verfahren Anspruch 4, dadurch gekennzeichnet, daß am Ausfügsende des aktuellen Mikrobefehls (AMB) der kanalspezifisch neu gelesene Mikrobefehl (MB) in das zugehörige Mikrobefehl-Instruktions-Register (MPIRi) und die zugehörige Mikrobefehlsspeicher-Ansteueradresse (ROMA) in das zugehörige Mikrobefehl-Adreßregister (MPARi) eingetragen werden.

## Revendications

1. Dispositif pour préparer des micro-instructions pour au moins deux canaux de transmission de données, qui opèrent de façon indépendante, d'un contrôleur DMA, comportant une mémoire de micro-instruction (ROM), un registre d'adresses de micro-instructions et un registre de micro-instructions, caractérisé par le fait qu'en plus des registres usuels de pointeurs d'ordres, chaque canal de transmission de données est équipé d'un registre d'adresses de micro-instructions (MPARi) et respectivement d'un registre de micro-instructions (MPIRi), que les registres d'adresses de micro-instructions (MPIRi) contiennent l'adresse de la micro-instruction (MB) contenue dans le registre associé de micro-instructions (MPIRi), et que la mémoire de micro-instructions (ROM) dispose d'une mémoire intermédiaire MIC (SLATCH), qui contient une adresse (ROMA) de commande de la mémoire de micro-instructions.

2. Dispositif suivant la revendication 1, caractérisé par le fait que les registres de micro-instructions (MPIRi) représentent l'étage 0 pour un dispositif pipeline (PIP) branché en aval et pour une unité de commande d'exécution (AS).

3. Dispositif suivant la revendication 1 ou 2, caractérisé par des moyens (CC, AS, SQ, AKN) pour sélectionner un canal de transmission de données devant être nouvellement activé.

4. Procédé pour la mise en oeuvre d'un dispositif suivant l'une des revendications 1 à 3, caractérisé par le fait qu'après la sélection d'un canal de transmission de données devant être nouvellement activé, le registre associé de micro-instructions (MPIRi) et le registre associé d'adresses de micro-instructions (MPARi) sont lus et que l'adresse (ROMA) de commande de micro-instructions est mémorisée temporairement dans la mémoire intermédiaire (SLATCH) et est utilisée dans la mémoire de micro-instructions (ROM) pour la commande et un cycle de lecture, qui fournit la nouvelle micro-instruction (MB).

5. Procédé suivant la revendication 4, caractérisé par le fait que pendant l'exécution d'une micro-instruction actuelle (AMB), un séquenceur (SQ) prépare, sur la base d'informations de test et de commande (TI, CI), l'adresse (ROMA) de commande de la mémoire de micro-instructions pour la micro-instruction (MB) suivante.

6. Procédé suivant la revendication 4, caractérisé par le fait qu'à la fin de l'exécution de la micro-instruction actuelle (AMB), la micro-instruction (MB), nouvellement lue d'une manière spécifique au canal, est introduite dans le registre associé de micro-instructions (MPIRi) et que l'adresse associée (ROMA) de commande de la mémoire de micro-instructions est insérée dans le registre associé (MPARi) d'adresses de micro-instructions.

**Claims**

1. Device for supplying microcommands for at least two independently operating data transmission channels of a DMA controller, having a microcommand memory (ROM), having microcommand address registers and microcommand instruction registers, characterized in that, in addition to the conventional command pointer registers, each data transmission channel is provided with a microcommand address register (MPARi) and with one microcommand instruction register (MPIRi) each, in that the microcommand address registers (MPARi) contain the address of the microcommand (MB) contained in the associated microcommand instruction register (MPIRi), and in that the microcommand memory (ROM) has a single intermediate memory (SLATCH) which contains a microcommand memory activation address (ROMA).

2. Device according to Claim 1, characterized in that the microcommand instruction registers (MPIRi) represent the stage 0 for a downstream pipeline device (PIP) and for an execution controller (AS).

3. Device according to Claim 1 or 2, characterized by means (CC, AS, SQ, AKN) for selecting a data transmission channel to be newly activated.

4. Method for operating a device according to one of Claims 1 to 3, characterized in that, after selecting a data transmission channel to be newly activated, the associated microcommand instruction register (MPIRi) and the associated microcommand address register (MPARi) are read out, and in that the microcommand activation address (ROMA) is temporarily stored in the intermediate memory (SLATCH) and is used in the microcommand memory (ROM) for activating a read cycle which supplies the new microcommand (MB).

5. Method according to Claim 4, characterized in that, during the execution of a current microcommand (AMB), a sequencer (SQ) supplies the microcommand memory activation address (ROMA) of the following microcommand (MB) on the basis of test and control information (TI, CI).

6. Method according to Claim 4, characterized in that, at the end of execution of the current microcommand (AMB), the channel specific newly-read microcommand (MB) is input into the associated microcommand instruction register (MPIRi) and the associated microcommand memory activation address (ROMA) is input into the associated microcommand address register (MPARi).

1